# FASCICULE DE BREVET EUROPEEN

(11) **EP 2 722 414 B1**
(45) Date de publication et mention de la délivrance du brevet: **11.03.2020**
(21) Numéro de dépôt: 11867778.0
(22) Date de dépôt: 18.11.2011
(51) Int. Cl.: C23C 26/00, B32B 15/08, B05D 3/12, B05D 7/16

(54) **PROCÉDÉ DE FABRICATION D'UN PANNEAU MÉTALLIQUE ET PANNEAU MÉTALLIQUE AINSI OBTENU**
VERFAHREN ZUR HERSTELLUNG EINER METALLPLATTE UND HERGESTELLTE METALLPLATTE
METHOD FOR THE PRODUCTION OF A METAL PANEL AND RESULTING METAL PANEL

(30) Priorité: 14.06.2011 ES 201130986
(43) Date de publication de la demande: 23.04.2014
(73) Titulaire: Recubrimientos Plasticos, S.A., 31190 Astrain, Navarra (ES)
(72) Inventeur: TAPIA DE LA FUENTE, Carlos, 31190 Astrain (Navara) (ES); LERGA LAMARIQUE, Beatriz, 31190 Astrain (Navarra) (ES); GARCES INUÑEZ, Yolanda, 31190 Astrain (Navarra) (ES)
(74) Mandataire: Urizar Barandiaran, Miguel Angel
(86) Numéro de dépôt international: PCT/ES2011/070795
(87) Numéro de publication internationale: WO 2012/172130

(56) Documents cités:
- EP-A1- 1 834 759
- EP-A1- 2 157 208
- EP-A1- 2 157 208
- EP-A2- 2 042 533
- WO-A1-2005/084941
- DE-A1- 10 022 541
- DE-A1-102008 009 504
- ES-A1- 2 310 112
- US-A1- 2008 113 159

## Description

L'acier inoxydable est encore, de nos jours, un des matériaux les plus consommés dans le secteur électroménager qui, malgré l'introduction de nombreuses imitations, continue à être très demandé. Non seulement le secteur électroménager est intéressé par ce type de finition, mais aussi d'autres secteurs esthétiques comme le mobilier, la décoration, les ascenseurs, le secteur naval et même le secteur sanitaire, avec dans celui-ci une utilisation totalement différente.

Il s'ensuit que l'acier inoxydable est un des matériaux dont la demande a augmenté exponentiellement durant les dernières années.

Toutefois, l'acier inoxydable, malgré son esthétique délicate, est toujours un métal excessivement froid au toucher, très propice à reproduire les empreintes digitales sur sa surface, une fois qu'on le touche. C'est pour cela qu'il est nécessaire de le nettoyer constamment, ce nettoyage étant souvent ennuyeux avec une multitude de produits d'entretien, qui, à de nombreuses occasions, ne réussissent pas à enlever facilement les traces. Ceci fait de l'acier inoxydable un produit haute gamme, mais dont les prestations esthétiques diverses ne répondent pas à la commodité requise pour une utilisation habituelle : ménagère (par exemple, les appareils électroménagers) et public (par exemple, les rampes des escaliers mécaniques, les ascenseurs).

Le problème est que son prix est toujours élevé, puisque le substrat est de l'acier inoxydable. Au contraire, son grand avantage est l'esthétique métallique, la possibilité de différentes conceptions et différentes fonctionnalités.

Pour baisser le prix, des aciers inoxydables faiblement alliés ont été utilisés, ce qui fait apparaître le nouveau problème des oxydations superficielles.

Pour éviter ces oxydations, des recouvrements avec lesquels l'on peut utiliser de l'inoxydable plus faiblement allié ont été utilisés, lesquels sont par conséquent plus économiques, sans nuire au comportement contre la corrosion et même en augmentant la résistance UV.

L'on connaît déjà des produits obtenus avec cette technique de recouvrement, par exemple, le Brevet EP0686501 de système multicouches effectué sur un acier galvanisé, de l'aluminium et/ou un électrozingage et dont le recouvrement est effectué avec une couche de peinture.

Le problème de ce type de produits est que l'esthétique obtenue n'est pas adéquate.

Il est connu par le document DE102008009504, un processus de fabrication d'un panneau métallique, caractérisé par le fait que:
a) l'on soumet une plaque en acier inoxydable au chrome (Cr) sur au moins une de ses faces à un traitement mécanique jusqu'à obtenir une rugosité moyenne de 0,5 à 1,5 µm
b) l'on applique un recouvrement transparent.

Le demandeur a étudié le problème en laboratoire, et a conclu que cette présence esthétique non adéquate réside dans le fait que l'esthétique du produit final est obtenue grâce à la peinture qui recouvre le substrat sur lequel elle est appliquée, c'est-à-dire que l'utilisateur perçoit de la peinture et pas la surface de l'acier inoxydable.

Le demandeur considère aussi qu'il est essentiel d'améliorer l'esthétique de la surface même de la plaque en acier inoxydable, et pour cela, cette surface est modifiée avec un traitement mécanique de polissage et de satinage qui donne une surface homogène mais avec un dessin préétabli, en obtenant des rugosités qui oscillent entre 0'06 µm et 1 µm, ce pourquoi l'on obtient un esthétique incomparablement supérieure.

Par ailleurs, le demandeur a vérifié que seul le ponçage ou le satinage du matériau (bien qu'il obtienne l'esthétique souhaitée) arrache les oxydes de chrome superficiels, ce qui provoque une corrosion accélérée sur le matériau, sous forme de piqûres de corrosion.

Le demandeur a trouvé la manière de maintenir la splendide esthétique superficielle obtenue après le traitement mécanique et, en même temps, que cette surface ne soit pas corrodée.

À cet effet, une fois obtenue cette esthétique, elle est maintenue dans le produit final du demandeur, de sorte que l'utilisateur perçoit les tons bleutés, blanchâtres ou jaunâtres, ainsi que le trait/dessin et les différentes rugosités de la surface de l'acier inoxydable. Pour l'obtenir, par le produit du demandeur intègre un/des recouvrement/s transparents qui sont appliqués à cette surface de l'acier inoxydable.

Concrètement, cette surface est recouverte avec au moins un recouvrement/apprêt transparent d'une épaisseur de 15 ÷ 50 µm.

La plaque doit être en acier inoxydable au chrome et de nature ferritique ou austénitique.

Le processus et le produit de fabrication d'un panneau métallique, selon la présente invention se caractérise par le fait que :
a) une plaque d'acier inoxydable au chrome (Cr) d'une épaisseur de 0,1 - 2,00 mm est soumise sur au moins une de ses faces à un traitement mécanique de polissage et de satinage jusqu'à obtenir une rugosité superficielle Rₐ de 0,06 - 1 µm avec un trait/dessin prédéterminé, et sur celle-ci
b) est appliqué un recouvrement/apprêt transparent d'adhésif ou de laque et
c) le recouvrement/apprêt est polymérisé.

### Description du processus en général

Le processus se compose des phases suivantes :
1) La base métallique est un acier inoxydable (ses caractéristiques mécaniques, limites élastique, limite de rupture et allongement dépassent toutes les valeurs de la norme), d'une épaisseur d'entre 0,10-2,00 mm et qui est poncé à sec ou par voie humide (avec du papier abrasif dont le grain est de 280 à 600) et/ou polissage et/ou satinage mécanique à une vitesse entre 10 et 20 m/min pour obtenir une rugosité, une finition et un degré de couleur du métal spécifique.
2) Le matériel obtenu est traité chimiquement par une série de bains de nettoyage, dégraissage chimique et lavages à base d'eau.
3) Application d'un adhésif transparent sur la face polie à l'émeri et/ou satinée, sur la base d'une résine polyester, acrylique ou polyuréthane, de 15 à 50 microns humides, (avant le traitement).
4) Polymérisation de l'adhésif dans un four pour atteindre une température du métal qui va de 180 à 220°C pour l'évaporation des solvants et, optionnellement, application d'un apprêt polyester, au polybutylène, époxy ou au polyuréthane sur la face inférieure ou non visible, ou d'un traitement chimique à base d'eau avec adhésion de mousses de polyuréthane.
5) Application d'un film PET d'entre 15 et 30 microns d'épaisseur pour obtenir le scellage total du produit et, finalement, la réfrigération de ce dernier.
   Comme seconde option, au lieu de l'adhésif et de la couche de PET, il est possible d'appliquer sur l'acier inoxydable poli une laque acrylique ou polyester, transparente, d'une couche d'environ 10-20 microns humides (avant le traitement), avec un apprêt polyester, au polybutylène, époxy ou au polyuréthane sur la face inférieure ou la partie non visible, de manière facultative.
   Le matériau est introduit dans le four qui peut atteindre une température de métal 210-250°C pour traiter le recouvrement. Réfrigération postérieure du matériel avec de l'eau et de l'air.
6) (2^{nde} Phase facultative) Il est possible de placer facultativement un film protecteur après l'application du film PET (ou de la laque) dans le but de protéger le recouvrement durant le modelage et la manipulation.

Le produit résultant de ce processus présente des améliorations substantielles par rapport à un produit conventionnel et en comparaison avec le produit du Brevet EP0686501, comme il est visible sur les tests suivants.

| Tests | Produit conventionnel | Produit de l'invention |
|---|---|---|
| ECCA T4 | H | >H avec laque |
| Dureté aux crayons | | >3H avec film PET |
| ECCA T6 (emboutissage Erichsen) | jusqu'à 7 mm | supérieur à 8 mm |
| ECCA T7 Résistance au pliage | 0.5-1T (fissuration substrat) | 0T sans fissuration |
| ECCA T8 Résistance à la corrosion en chambre de brouillard salin | 190h | >400 heures |
| ECCA T11 Résistance au MEK | Marque et des cercles apparaissent | sans cercle ni restes >100 frottements |
| ECCA T13 Résistance au vieillissement par chaleur | 200 h à 120°C | 500 h à 120°C |
| ECCA T18 Résistance aux taches* après 16 heures | Superficie non homogène, attaquée après le nettoyage | Superficie propre et non attaquée |

| | | |
|---|---|---|
| *beurre, huile, essence, rouge à lèvres, thé, café, cirage, tomate, moutarde, chocolat... **Exemples** : | | |

### Exemple 1

Substrat : Acier inoxydable ferritique AISI 430 et d'une épaisseur de 0,60 mm.

Processus de texturisation : Processus de polissage avec du papier abrasif de grain 320, et satinage postérieur, rugosité Ra= 0,20 microns, Satinage appliqué sur le substrat de manière mécanique au moyen de papier abrasif en tissu à un degré standardisé et appelé sur le marché « Scotch brite », avec obtention de couleur, en rang b=3 (coordonnées CIE Lab).

Traitement chimique : nettoyage chimique par une série de dégraissages et de lavages à l'eau.

Application de recouvrement organique liquide : application d'un adhésif polyester (25 microns) sur la face visible et d'un apprêt époxy (10 microns) sur la face non visible. Traitement du produit au four à température de métal de 220°C. Application film PET : application d'un film PET brillant de 20 microns Application film protecteur : application d'un film protecteur (50 microns d'épaisseur).

### Exemple 2 (ne correspondant pas à l'invention)

Substrat : Acier inoxydable AISI 430, 0,7 mm d'épaisseur, avec une rugosité Ra=0.8 microns, satiné avec des papiers abrasifs en liège et brillant de substrat obtenu de 110-130%.

Dégraissage alcalin et lavage du substrat métallique, avec un bain d'eau courante et un autre bain d'eau déminéralisée.

Application sur le substrat d'une laque acrylique à base solvable ou à base d'eau (15 microns d'épaisseur humide) et traitement au four à convection à PMT= 224°C.

Application du film de protection de 40 microns d'épaisseur pour mieux manipuler le produit final.

### Exemple 3 (ne correspondant pas à l'invention)

Substrat : Substrat : Acier inoxydable AISI 430 d'une épaisseur de 0,6 mm et finition avec une rugosité Ra=0.15 microns.

Polissage et ponçage avec des papiers abrasifs d'un grain 400 sur le métal.

Traitement chimique : nettoyage chimique au moyen de deux dégraissages et de deux lavages, ce dernier avec de l'eau déminéralisée d'une conductivité inférieure à 50 µS/cm.

Application d'un traitement chimique à base d'eau sur la face inférieure ou non visible, favorable pour l'adhésion de mousses de polyuréthane.

Application de recouvrement organique liquide : application d'un adhésif polyester (15 microns) sur la face visible. Traitement du produit au four à température de métal de 220°C.

Application film PET : application d'un film PET mate antibactérien d'une épaisseur de 20 microns.

Le contrôle du brillant sera effectué avec des agents matifiants sur la laque ou le film PET, de sorte que le brillant soit obtenu à volonté entre 40% et >100% selon les demandes finales du client.

Avec ce produit, l'on obtient une amélioration conséquente du vieillissement en chambre saline de jusqu'à 700 heures, ainsi qu'un nettoyage facile de la surface, sans laisser de marques ni cercles des produits de nettoyage conventionnels, en lui donnant une surface complètement uniforme après l'avoir nettoyé uniquement avec un chiffon doux et de l'eau.

La procédure et le produit obtenu sont totalement flexibles, avec un grand nombre de finitions texturisées selon le processus mécanique, les couleurs et l'aspect, divers avec les recouvrements organiques, personnalisé pour chaque client et secteur.

Avec le polissage, le ponçage et le satinage avec des papiers abrasifs satinants de différents grains et composition, et selon les jeux et les combinaisons de papiers abrasifs, liège, graphite... différentes finitions de rugosités et des traits/dessins sont obtenues.

Selon si les processus sont effectués à sec ou dans des conditions humides, la couleur et ses tonalités de jaunes, bleutés et blanchâtre peut varier à volonté, ce qui, en le combinant avec les différentes rugosités et traits, suppose une offre très versatile aux utilisateurs.

## Revendications

1. Processus de fabrication d'un panneau métallique, **caractérisé par le fait que** :
a) l'on soumet une plaque en acier inoxydable au chrome (Cr) d'une épaisseur de 0,1 - 2,00 mm sur au moins une de ses faces à un traitement mécanique de polissage et d'un satinage à une vitesse entre 10 et 20 m/min. jusqu'à obtenir une rugosité superficielle Rₐ de 0,06 à 1 µm avec un trait/dessin prédéterminé, et sur celle-ci
b) l'on applique une imprégnation/recouvrement transparent d'adhésif ou de laque et
c) l'on polymérise l'imprégnation/recouvrement.

2. Processus de fabrication d'un panneau métallique, selon la revendication 1, **caractérisé par le fait que** l'imprégnation/recouvrement est un adhésif à base de polyester, acrylique ou polyuréthane.

3. Processus de fabrication d'un panneau métallique, selon la revendication 1, **caractérisé par le fait que** l'imprégnation/recouvrement est une laque à base acrylique et/ou polyester, qui remplit les cavités du ponçage du substrat en créant une couche imperméable.

4. Processus de fabrication d'un panneau métallique, selon l'une des revendications précédentes, **caractérisé par le fait que** l'on applique une imprégnation, à base solvable ou d'eau, sur le dos ou sur la face non visible, qui favorise l'adhésion aux mousses de polyuréthane, normalement utilisées dans le secteur électroménager.

5. Processus de fabrication d'un panneau métallique, selon l'une des revendications précédentes, **caractérisé par le fait que** l'on applique un film PET de recouvrement qui scelle l'ensemble.

6. Panneau métallique, obtenu conformément au processus des revendications 1 à 5, **caractérisé par le fait qu'**il dispose de:
a) une plaque en acier inoxydable au chrome (Cr) d'une épaisseur de 0,1 à 2,00 mm avec au moins une de ses faces polie et satinée, présentant une rugosité superficielle Rₐ de 0,06 à 1 µm, cette rugosité ayant un trait/dessin prédéterminé, et sur celle-ci
b) une imprégnation/recouvrement traitée et transparente d'un adhésif ou laque.

## Patentansprüche

1. Verfahren zur Herstellung einer Metallplatte, **gekennzeichnet durch**:
a) Eine Edelstahlplatte mit Chrom (Cr), in einer Stärke von 0,1 - 2,00 mm auf mindestens einer Seite, wird einer mechanischen Schleif- und Glättungsbehandlung bei einer Geschwindigkeit zwischen 10 und 20 m/min unterzogen, bis eine Oberflächenrauigkeit Rₐ von 0,06 bis 1 µm mit vorbestimmtem Strich/vorbestimmter Zeichnung erreicht wurde, und darüber
b) wird eine Imprägnierung/eine transparente Beschichtung mit Haftmittel oder Lack aufgetragen und
c) die Imprägnierung/Beschichtung polymerisiert

2. Verfahren zur Herstellung einer Metallplatte nach Anspruch 1, **gekennzeichnet dadurch, dass** die Imprägnierung/Beschichtung aus einem Haftmittel auf Polyester-, Acryl- oder Polyurethanbasis besteht.

3. Verfahren zur Herstellung einer Metallplatte nach Anspruch 1, **gekennzeichnet dadurch, dass** die Imprägnierung/Beschichtung aus einem Lack auf Acryl- und/oder Polyesterbasis besteht, der die Vertiefungen durch den Schleifvorgang des Substrats auffüllt und eine undurchlässige Schicht bildet.

4. Verfahren zur Herstellung einer Metallplatte nach einem der vorhergehenden Ansprüche, **gekennzeichnet dadurch, dass** eine Imprägnierung auf löslicher oder auf Wasserbasis auf der Rückseite oder der nicht sichtbaren Seite aufgebracht wird, die das Anhaften von Polyurethanschaum begünstigt, der normalerweise bei Elektrohaushaltsgeräten eingesetzt wird.

5. Verfahren zur Herstellung einer Metallplatte nach einem der vorhergehenden Ansprüche, **gekennzeichnet dadurch, dass** eine PET-Folie als Beschichtung aufgebracht wird, die die Einheit versiegelt.

6. Hergestellte Metallplatte nach dem Verfahren in einem der Ansprüche 1 bis 5, **gekennzeichnet dadurch, dass** sie über Folgendes verfügt:
a) Eine geschliffene und geglättete Edelstahlplatte mit Chrom (Cr), in einer Stärke von 0,1 bis 2,00 mm auf mindestens einer Seite, die eine Oberflächenrauigkeit Rₐ von 0,06 bis 1 µm mit einem vorbestimmten Strich/einer Zeichnung aufweist, und darüber
b) eine Imprägnierung/eine transparente Beschichtung mit Haftmittel oder Lack.

## Claims

1. Method for production of a metal panel **characterized in that**:
a) a stainless steel plate chromed (Cr) with a thickness of 0.1 - 2.00 mm on at least one of its faces is subjected to a mechanical treatment of polishing and brushing at a speed of between 10 and 20 m/min. until obtaining a surface roughness Rₐ of 0.06 to 1 µm with a predetermined stroke/design, and on it
b) an impregnation/a transparent coat of adhesive or varnish is applied.
c) the impregnation/the coat is polymerized

2. Method for production of a metal panel according to claim 1 **characterized in that** the impregnation/the coating is a polyester-, acrylic- or polyurethane-based adhesive.

3. Method for production of a metal panel according to claim 1 **characterized in that** the impregnation/the coat is an acrylic- and/or polyester-based varnish that fills the cavities of the polish of the undercoat creating an impermeable layer.

4. Method for production of a metal panel according to one of the foregoing claims **characterized in that** a soluble or water-based impregnation is applied, on the back or the face not visible that facilitates adhesion to the polyurethane foams normally used in the electrical appliance sector.

5. Method for production of a metal panel according to one of the foregoing claims **characterized in that** a coat of PET film is applied that seals the unit.

6. Metal panel resulting according to the process of claims 1 to 5 **characterized in** having:
a) a stainless steel plate chromed (Cr) with a thickness of 0.1 to 2.00 mm on at least one of its faces polished and brushed that presents a surface roughness Rₐ of 0.06 to 1 µm with a predetermined stroke/design, and on it
b) an impregnation/a transparent coat of an adhesive or varnish.
